# EUROPEAN PATENT APPLICATION

(11) **EP 3 800 577 A1**
(43) Date of publication of application: **07.04.2021**
(21) Application number: 20199572.7
(22) Date of filing: 01.10.2020
(51) Int. Cl.: G06K 9/00, G06N 3/04

(54) **CLASSIFICATION AND RE-IDENTIFICATION USING A NEURAL NETWORK**

(30) Priority: 01.10.2019 US 201962908939 P
(71) Applicant: Sensormatic Electronics, LLC, Boca Raton, FL 33487 (US)
(72) Inventor: FALIK, Yohay, Boca Raton, Florida 92121 (US); ROZNER, Amit, Boca Raton, Florida 92121 (US); AMORES LLOPIS, Jaume, Boca Raton, Florida 92121 (US); KIRSCH, Lior, Boca Raton, Florida 92121 (US); LEE, Young M., Boca Raton, Florida 92121 (US)
(74) Representative: Trinks, Ole

(57) **Abstract**

Aspects of the present disclosure include methods, systems, and non-transitory computer readable media that perform the steps of receiving one or more snapshots, extracting one or more features from the one or more snapshots, and providing the one or more features to a first classification layer for classifying a first target and a second classification layer for re-identifying a second target.

## Description

### CROSS-REFERENCE TO RELATED APPLICATIONS

The current application claims the benefit of United States Provisional Application No. 62/908,939, entitled "CLASSIFICATION AND RE-IDENTIFICATION," filed on October 1, 2019, the contents of which are incorporated by reference in their entireties.

### BACKGROUND

In surveillance systems, numerous images (e.g., more than thousands or even millions) may be captured by multiple cameras. Each image may show people and objects (e.g., cars, infrastructures, accessories, etc.). In certain circumstances, security personnel monitoring the surveillance systems may want to locate and/or track a particular person and/or object through the multiple cameras. However, the process may be computationally intensive for the surveillance systems to accurately track the particular person and/or object by searching through the images. Further, during the training of the neural network used for re-identification, the computer resources may be allocated for both classification and re-identification. Therefore, improvements may be desirable.

### SUMMARY

This summary is provided to introduce a selection of concepts in a simplified form that are further described below in the DETAILED DESCRIPTION. This summary is not intended to identify key features of the claimed subject matter, nor is it intended to be used as an aid in determining the scope of the claimed subject matter.

An aspect of the present disclosure includes a method including receiving one or more snapshots, extracting one or more features from the one or more snapshots, and providing the one or more features to a first classification layer for classifying a first target and a second classification layer for re-identifying a second target.

Aspects of the present disclosure includes a neural network including feature layers configured to: receive one or more snapshots, extracting one or more features from the one or more snapshots, and providing the one or more features to a first classification layer and a second classification layer, the first classification layer configured to re-identify a first target, and the second classification layer configured to classify a second target.

Certain aspects of the present disclosure includes a non-transitory computer readable medium having instructions stored therein that, when executed by a processor, cause the processor to cause feature layers to: receive one or more snapshots, extracting one or more features from the one or more snapshots, and providing the one or more features to a first classification layer and a second classification layer, cause the first classification layer configured to re-identify a first target, and cause the second classification layer configured to classify a second target.

### BRIEF DESCRIPTION OF THE DRAWINGS

The features believed to be characteristic of aspects of the disclosure are set forth in the appended claims. In the description that follows, like parts are marked throughout the specification and drawings with the same numerals, respectively. The drawing figures are not necessarily drawn to scale and certain figures may be shown in exaggerated or generalized form in the interest of clarity and conciseness. The disclosure itself, however, as well as a preferred mode of use, further objects and advantages thereof, will be best understood by reference to the following detailed description of illustrative aspects of the disclosure when read in conjunction with the accompanying drawings, wherein:
FIG. 1 illustrates an example of an environment for implementing a classification and re-identification process during the training of a neural network in accordance with aspects of the present disclosure;
FIG. 2 illustrates an example of a neural network in accordance with aspects of the present disclosure;
FIG. 3 illustrates an example of a method for implementing the classification and re-identification process in accordance with aspects of the present disclosure; and
FIG. 4 illustrates an example of a computer system in accordance with aspects of the present disclosure.

### DETAILED DESCRIPTION

The following includes definitions of selected terms employed herein. The definitions include various examples and/or forms of components that fall within the scope of a term and that may be used for implementation. The examples are not intended to be limiting.

The term "processor," as used herein, can refer to a device that processes signals and performs general computing and arithmetic functions. Signals processed by the processor can include digital signals, data signals, computer instructions, processor instructions, messages, a bit, a bit stream, or other computing that can be received, transmitted and/or detected. A processor, for example, can include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described herein.

The term "bus," as used herein, can refer to an interconnected architecture that is operably connected to transfer data between computer components within a singular or multiple systems. The bus can be a memory bus, a memory controller, a peripheral bus, an external bus, a crossbar switch, and/or a local bus, among others.

The term "memory," as used herein, can include volatile memory and/or nonvolatile memory. Non-volatile memory can include, for example, ROM (read only memory), PROM (programmable read only memory), EPROM (erasable PROM) and EEPROM (electrically erasable PROM). Volatile memory can include, for example, RAM (random access memory), synchronous RAM (SRAM), dynamic RAM (DRAM), synchronous DRAM (SDRAM), double data rate SDRAM (DDR SDRAM), and direct RAM bus RAM (DRRAM).

In some aspects of the present disclosures, neural networks for the classification and feature extraction may have similar architectures. A time-consuming portion of the training process is the feature layers in the neural network. In some instances, the calculations from the feature layers may be used for both the classification and the feature extraction processes to conserve computational resources. The feature layers may extract visual patterns that are used in both the classification and the feature extraction processes for re-identification.

In some instances, providing the identified features to the layer for classification and the layer(s) for re-identification in parallel, simultaneously, and/or contemporaneously may obviate the need to repeat the feature extraction processes. In an aspect of the present disclosure, the neural network performs the feature extraction processes, and then provides the extracted features to the re-identification layer(s) and the classification layer in parallel (e.g., providing the extracted features to the re-identification layer(s) and the classification layer), simultaneously (e.g., providing the extracted features to the re-identification layer(s) and the classification layer at the same time), and/or contemporaneously (e.g., providing the extracted features to the re-identification layer(s) during a first time and the classification layer during a second time that overlaps at least partially with the first time).

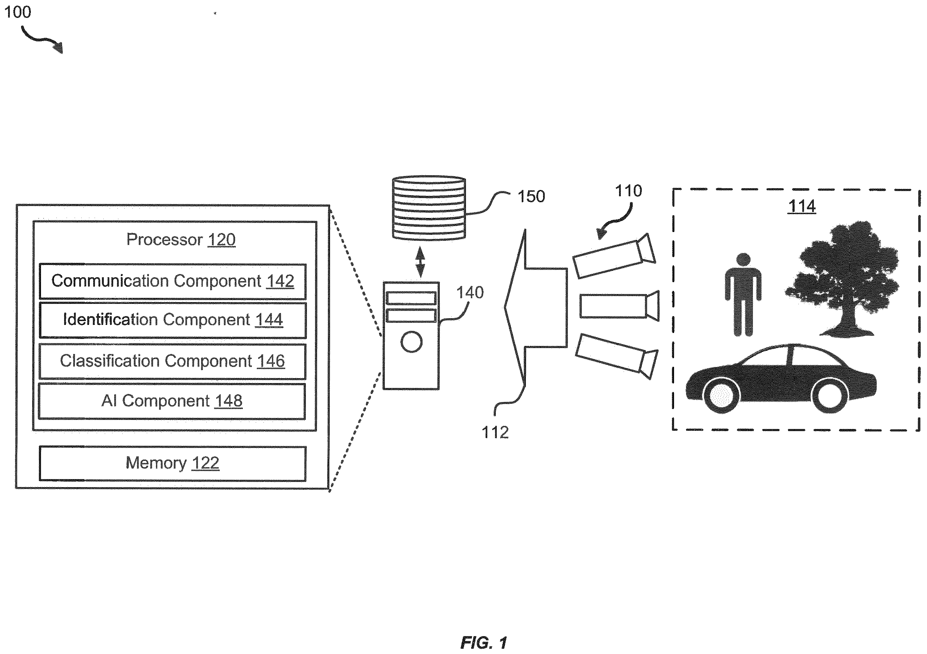

Referring to FIG. 1, an example of an environment 100 for performing classification and re-identification during training may include a server 140 that receives surveillance videos and/or images 112 from a plurality of cameras 110. The plurality of cameras 110 may capture the surveillance videos and/or images 112 of one or more locations 114 that include targets such as people and/or objects (e.g., cars, bags, etc.).

In certain instances, the server 140 may include a processor 120 and/or a memory 122. The processor 120 and/or the server 140 may include a communication component 142 that receives and/or sends data (such as the captured surveillance videos and/or images 112) from and to other devices, such as a data repository 150. The processor 120 and/or the server 140 may include an identification component 144 that performs the re-identification process. The processor 120 and/or the server 140 may include a classification component 146 that classifies one or more images or objects in the images. The processor 120 and/or the server 140 may include an artificial intelligence (AI) component 148 that performs AI operations during the re-identification and/or classification processes. The communication component 142, the identification component 144, the classification component 146, and/or the AI component 148 may be implemented via software, hardware, or a combination thereof. For example, the communication component 142, the identification component 144, the classification component 146, and/or the AI component 148 may be programs stored in the memory 122 being executed by the processor 120. In another example, the communication component 142, the identification component 144, the classification component 146, and/or the AI component 148 may be implemented in one or more microprocessors, microcontrollers, programmable logic devices, field programmable gate arrays, or other hardware devices.

In some implementations, the captured surveillance videos and/or images may include snapshots (i.e., frames or portions of frames). For example, a one minute surveillance video and/or images may include 30, 60, 120, 180, 240, or other numbers of snapshots. During the classification and re-identification process, the communication component 142 may receive the surveillance video and/or images 112 from the plurality of cameras 110. The identification component 144 may perform the re-identification process of the targets in the surveillance video and/or images 112. The classification component 146 may classify the targets in the surveillance video and/or images 112. The AI component 148 may perform the feature extraction process.

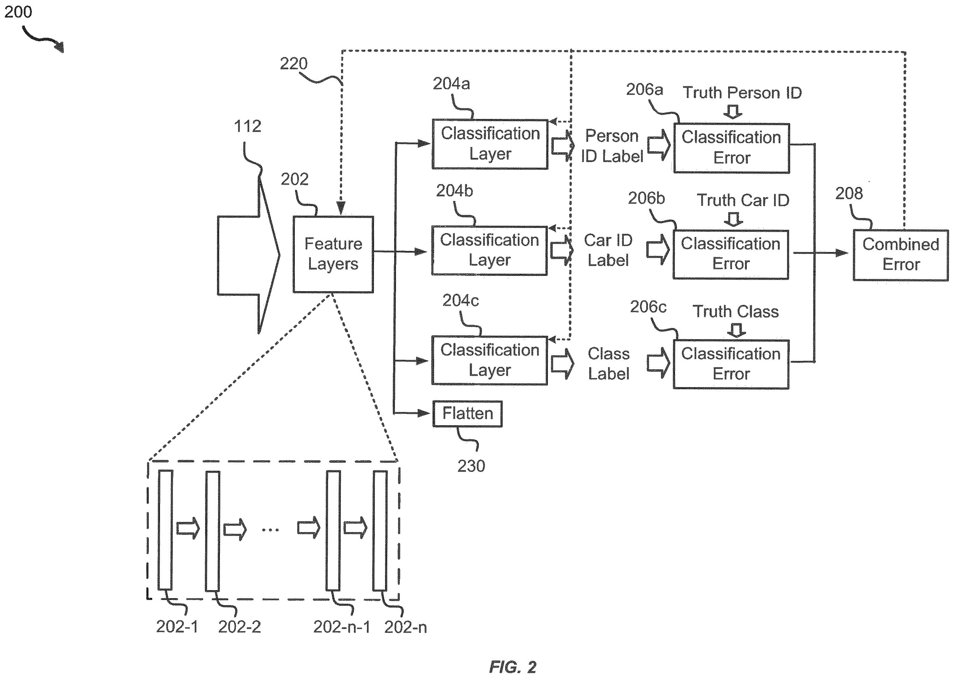

Turning to FIG. 2, an example of a neural network 200 for classification and re-identification may include feature layers 202 that receive the surveillance videos and/or images 112 as input. The feature layers 202 may be a deep learning algorithm that includes feature layers 202-1, 202-2..., 202-n-1, 202-n. Each of the feature layers 202-1, 202-2..., 202-n-1, 202-n may perform a different function and/or algorithm (e.g., pattern detection, transformation, feature extraction, etc.). In a non-limiting example, the feature layer 202-1 may identify edges of the surveillance videos and/or images 112, the feature layer 202-b may identify corners of the surveillance videos and/or images 112... the feature layer 202-n-1 may perform a non-linear transformation, and the feature layer 202-n may perform a convolution. In another example, the feature layer 202-1 may apply an image filter to the surveillance videos and/or images 112, the feature layer 202-2 may perform a Fourier Transform to the surveillance videos and/or images 112... the feature layer 202-n-1 may perform an integration, and the feature layer 202-n may identify a vertical edge and/or a horizontal edge. Other implementations of the feature layers 202 may also be used to extract features of the surveillance videos and/or images 112.

In certain implementations, the output of the feature layers 202 may be provided as input to classification layers 204a, 204b, 204c. The classification layer 204a may be configured to identify a person and/or provide a person identification (ID) label associated with the identified person. The classification layer 204b may be configured to identify an object (e.g., a car, a person...) and/or provide an ID label associated with the identified object. The classification layer 204c may be configured to identify a class (e.g., person or car) and/or provide a class label associated with the identified class.

Although FIG. 2 illustrates an example having three classification layers 204, aspects of the present disclosure may include neural networks having different number of classification layers and different types of classification layers. For example, another example of a neural network may include 4 classification layers (e.g., person, vehicle, personal accessory, and class). In another example, a neural network may include a vehicle classification layer only. Some of the classification layers 204 may perform classification and/or re-identification.

In some implementations, the classification layer 204a may output a person ID label. The classification layer 204b may output a car ID label. The classification layer 204c may output a class label. A classification error component 206a may receive the person ID label and a ground truth person ID as input. A classification error component 206b may receive the car ID label and a ground truth car ID as input. A classification error component 206c may receive the class label and a ground truth class as input. The ground truth person ID, ground truth car ID, and ground truth class may be the "correct answer" provided by a trainer (not shown) to the neural network 200 during training. For example, the neural network 200 may compare the car ID label to the ground truth car ID to determine whether the classification layer 204b properly identifies car associated with the car ID label. Other types of ID labels are possible.

In some instances, the neural network 200 may include a combined error component 208. Based on the person ID label and the ground truth person ID, the classification error component 206a may output a person error into the combined error component 208. Based on the car ID label and the ground truth car ID, the classification error component 206b may output a car error into the combined error component 208. Based on the class label and the ground truth class, the classification error component 206c may output a class error into the combined error component 208. The combined error component 208 may receive one or more of the person error, the car error, and/or the class error, and provide one or more updated parameters 220 to the feature layers 202 and/or the classification layer 204. The one or more updated parameters 220 may include modifications to parameters and/or equations to reduce the one or more of the person error, the car error, and/or the class error.

In some examples, the neural network 200 may include a flatten function 230 that generates a final output of the feature extraction step. For example, the flatten function 230 may be an operator that transforms a matrix of features into a vector.

During operation, the feature layers 202 of the neural network 200 may receive the surveillance videos and/or images 112. The feature layers 202-1, 202-2..., 202-n-1, 202-n may identify features in the surveillance videos and/or images 112. The feature layers 202 may send the identified features to the classification layers 204. In certain instances, the feature layers 202 may be implemented by the processor 120, the memory 122, the communication component 142, the identification component 144, the classification component 146, and/or the AI component 148. The classification layers 204 may receive the identified features. In some implementations, the classification layers 204a, 204b, 204c may receive the same identified features. In other implementations, the classification layers 204a, 204b, 204c may receive different identified features (e.g., tailored to person, car, and/or class). In some implementations, the identified features may be numerical representations (e.g., numbers, vectors, matrix, etc.) that enable the classification layers 204a, 204b, 204c to identify a person, a car, and/or a class. In certain instances, the classification layers 204 may be implemented by the processor 120, the memory 122, the identification component 144, and/or the classification component 146.

In some variations, the classification layer 204a may receive the identified features from the feature layers 202. Based on the received identified features, the classification layer 204a may provide a person ID label of a person in the surveillance videos and/or images 112. The person ID label may be an identifier (e.g., alpha-numeric) associated with a person in the surveillance videos and/or images 112. Based on the received identified features, the classification layer 204b may provide a car ID label of a car in the surveillance videos and/or images 112. The car ID label may be an identifier (e.g., alpha-numeric) associated with a vehicle (e.g., car) in the surveillance videos and/or images 112. Based on the received identified features, the classification layer 204c may provide a class label of a class (e.g., person class or car class) in the surveillance videos and/or images 112. The class label may be an identifier (e.g., alpha-numeric) associated with a class in the surveillance videos and/or images 112.

In certain implementations, the classification error component 206a may receive the person ID label and the ground truth person ID as input. The classification error component 206a may compare the person ID label and the ground truth person ID and generate an person error. The person error may be inversely proportional to a probability that the person ID label matches the ground truth person ID. For example, if there is a high probability (e.g., greater than 95%) that the person ID label matches the ground truth person ID, the person error may be small.

In some implementations, the classification error component 206b may receive the car ID label and the ground truth car ID as input. The classification error component 206b may compare the car ID label and the ground truth car ID and generate a car error. The car error may be inversely proportional to a probability that the car ID label matches the ground truth car ID. For example, if there is a high probability (e.g., greater than 95%) that the car ID label matches the ground truth car ID, the car error may be small.

In non-limiting implementations, the classification error component 206c may receive the class label and the ground truth class as input. The classification error component 206c may compare the class label and the ground truth class and generate a class error. The class error may be inversely proportional to a probability that the class label matches the ground truth class. For example, if there is a high probability (e.g., greater than 95%) that the class label matches the ground truth class, the class error may be small. In certain instances, the classification error component 206 may be implemented by the processor 120, the memory 122, the identification component 144, the classification component 146, and/or the AI component 148.

In some instances, a combined error component 208 may compute a combined error based on one or more of the person error, the car error, and/or class error. For example, the combined error component 208 may sum the person error, the car error, and class error to determine the combined error. In response to computing the combined error, the combined error component 208 may transmit the one or more updated parameters 220 to at least one of the feature layers 202, the classification layer 204a, the classification layer 204b, and/or the classification layer 204c. The one or more updated parameters 220 may adjust the parameters and/or algorithms used by the feature layers 202, the classification layer 204a, the classification layer 204b, and/or the classification layer 204c. In certain instances, the combined error component 208 may be implemented by the processor 120, the memory 122, the identification component 144, the classification component 146, and/or the AI component 148.

In some examples, the training of the neural network 200 includes reducing the combined error generated by the combined error component 208. Reduction of the combined error may indicate improvements in the ability of the neural network to correctly identify people, objects, and/or classes during the training process. In one aspect, the neural network 200 may attempt to minimize the combined error.

In some instances, the flatten function 230 may provide an output of the neural network. For example, the flatten function 230 may be an operator that transforms a matrix of features into a vector. In certain instances, the flatten function 230 may be implemented by the processor 120, the memory 122, the identification component 144, the classification component 146, and/or the AI component 148.

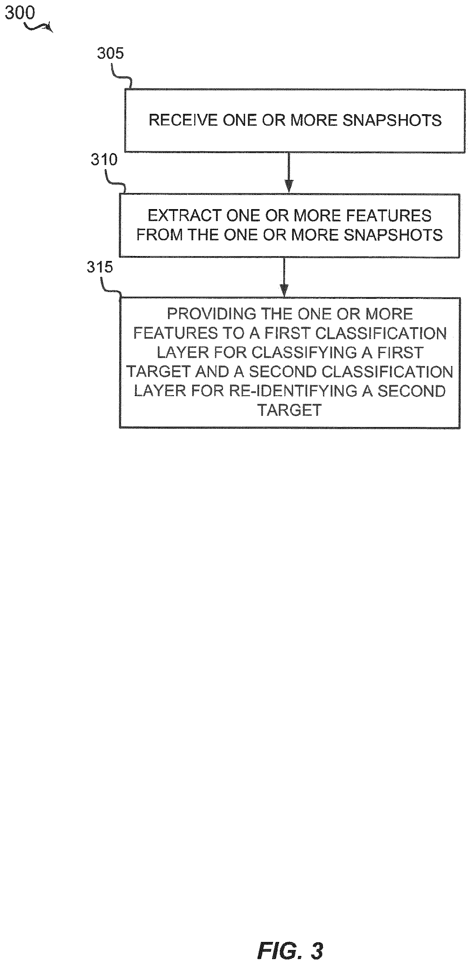

Turning now to FIG. 3, a method 300 of classification and re-identification may be performed by the server 140, the communication component 142, the identification component 144, the classification component 146, and/or the AI component 148.

At block 305, the method 300 may receive one or more snapshots. For example, the processor 120, the memory 122, and/or the communication component 142 may receive the surveillance videos and/or images 112 as described above with respect to FIG. 2. The processor 120, the memory 122, and/or the communication component 142 may be configured to and/or define means for receiving one or more snapshots.

At block 310, the method 300 may extract one or more features from the one or more snapshots. For example, the processor 120, the memory 122, and/or the AI component 148 may extract the features (e.g., a contour associated with a specific car, a height-to-weight ratio of a specific person, etc.) of the surveillance videos and/or images 112 as described above with respect to FIG. 2. The processor 120, the memory 122, and/or the AI component 148 may be configured to and/or define means for extracting one or more features from the one or more snapshots.

At block 315, the method 300 may provide, contemporaneously, simultaneously, or in parallel, the one or more features to a first classification layer for classifying a first target and a second classification layer for re-identifying a second target. For example, the processor 120, the memory 122, the identification component 144, the classification component 146, and/or the AI component 148 may provide the features of the surveillance videos and/or images 112 to the classification layers 204a, 204b, 204c. In some implementations, the AI component 148 may provide the features of the surveillance videos and/or images 112 as described above with respect to FIG. 2. The processor 120, the memory 122, the identification component 144, the classification component 146, and/or the AI component 148 may be configured to and/or define means for providing, contemporaneously, simultaneously, or in parallel, the one or more features to a first classification layer for classifying a first target and a second classification layer for re-identifying a second target.

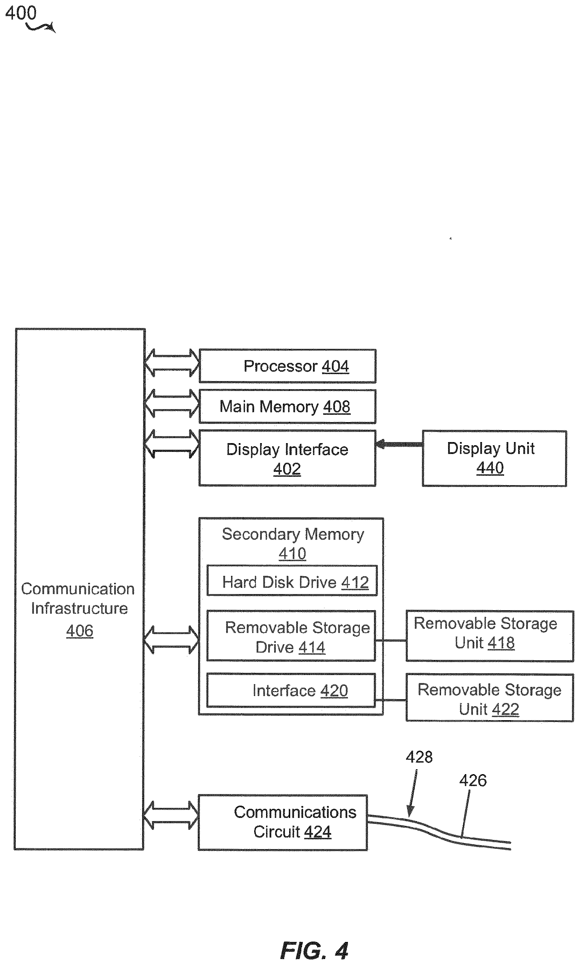

Aspects of the present disclosures may be implemented using hardware, software, or a combination thereof and may be implemented in one or more computer systems or other processing systems. In an aspect of the present disclosures, features are directed toward one or more computer systems capable of carrying out the functionality described herein. An example of such the computer system 400 is shown in FIG. 4. In some examples, the server 140 may be implemented as the computer system 400 shown in FIG. 4. The server 140 may include some or all of the components of the computer system 400.

The computer system 400 includes one or more processors, such as processor 404. The processor 404 is connected with a communication infrastructure 406 (e.g., a communications bus, cross-over bar, or network). Various software aspects are described in terms of this example computer system. After reading this description, it will become apparent to a person skilled in the relevant art(s) how to implement aspects of the disclosures using other computer systems and/or architectures.

The computer system 400 may include a display interface 402 that forwards graphics, text, and other data from the communication infrastructure 406 (or from a frame buffer not shown) for display on a display unit 440. Computer system 400 also includes a main memory 408, preferably random access memory (RAM), and may also include a secondary memory 410. The secondary memory 410 may include, for example, a hard disk drive 412, and/or a removable storage drive 414, representing a floppy disk drive, a magnetic tape drive, an optical disk drive, a universal serial bus (USB) flash drive, etc. The removable storage drive 414 reads from and/or writes to a removable storage unit 418 in a well-known manner. Removable storage unit 418 represents a floppy disk, magnetic tape, optical disk, USB flash drive etc., which is read by and written to removable storage drive 414. As will be appreciated, the removable storage unit 418 includes a computer usable storage medium having stored therein computer software and/or data. In some examples, one or more of the main memory 408, the secondary memory 410, the removable storage unit 418, and/or the removable storage unit 422 may be a non-transitory memory.

Alternative aspects of the present disclosures may include secondary memory 410 and may include other similar devices for allowing computer programs or other instructions to be loaded into computer system 400. Such devices may include, for example, a removable storage unit 422 and an interface 420. Examples of such may include a program cartridge and cartridge interface (such as that found in video game devices), a removable memory chip (such as an erasable programmable read only memory (EPROM), or programmable read only memory (PROM)) and associated socket, and other removable storage units 422 and interfaces 420, which allow software and data to be transferred from the removable storage unit 422 to computer system 400.

Computer system 400 may also include a communications circuit 424. The communications circuit 424 may allow software and data to be transferred between computer system 400 and external devices. Examples of the communications circuit 424 may include a modem, a network interface (such as an Ethernet card), a communications port, a Personal Computer Memory Card International Association (PCMCIA) slot and card, etc. Software and data transferred via the communications circuit 424 are in the form of signals 428, which may be electronic, electromagnetic, optical or other signals capable of being received by the communications circuit 424. These signals 428 are provided to the communications circuit 424 via a communications path (e.g., channel) 426. This path 426 carries signals 428 and may be implemented using wire or cable, fiber optics, a telephone line, a cellular link, an RF link and/or other communications channels. In this document, the terms "computer program medium" and "computer usable medium" are used to refer generally to media such as the removable storage unit 418, a hard disk installed in hard disk drive 412, and signals 428. These computer program products provide software to the computer system 400. Aspects of the present disclosures are directed to such computer program products.

Computer programs (also referred to as computer control logic) are stored in main memory 408 and/or secondary memory 410. Computer programs may also be received via communications circuit 424. Such computer programs, when executed, enable the computer system 400 to perform the features in accordance with aspects of the present disclosures, as discussed herein. In particular, the computer programs, when executed, enable the processor 404 to perform the features in accordance with aspects of the present disclosures. Accordingly, such computer programs represent controllers of the computer system 400.

In an aspect of the present disclosures where the method is implemented using software, the software may be stored in a computer program product and loaded into computer system 400 using removable storage drive 414, hard drive 412, or communications interface 420. The control logic (software), when executed by the processor 404, causes the processor 404 to perform the functions described herein. In another aspect of the present disclosures, the system is implemented primarily in hardware using, for example, hardware components, such as application specific integrated circuits (ASICs). Implementation of the hardware state machine so as to perform the functions described herein will be apparent to persons skilled in the relevant art(s).

It will be appreciated that various implementations of the above-disclosed and other features and functions, or alternatives or varieties thereof, may be desirably combined into many other different systems or applications. Also that various presently unforeseen or unanticipated alternatives, modifications, variations, or improvements therein may be subsequently made by those skilled in the art which are also intended to be encompassed by the following claims.

## Claims

1. A neural network, comprising:
feature layers configured to:
- receiving one or more snapshots;
- extracting one or more features from the one or more snapshots; and
- providing the one or more features to a first classification layer and a second classification layer;
- the first classification layer configured to re-identify a first target; and
- the second classification layer configured to classify a second target.

2. The neural network of claim 1, wherein:
- the first classification layer is further configured to transmit a target identification label associated with the first target to a first classification error component; and
- the second classification layer is further configured to transmit a class label associated with the second target to a second classification error component.

3. The neural network of claim 2,
further comprising the first classification error component, wherein the first classification error component is configured to:
- receive a ground truth target identification; and
- generate a target identification error based on the target identification label and the ground truth target identification.

4. The neural network of claim 3,
further comprising the second classification error component, wherein the second classification error component is configured to:
- receive a ground truth class; and
- generate a class error based on the class label and the ground truth class.

5. The neural network of claim 4,
further comprising a combined error component configured to:
- receive the target identification error and the class error;
- generate a combined error based on the target identification error and the class error;
- generate one or more updated parameters based on the combined error; and
- transmit the one or more updated parameters to at least one of the feature layers, the first classification layer, or the second classification layer,
wherein generating the one or more updated parameters preferably comprises generating the one or more updated parameters for minimizing the combined error.

6. The neural network of one of claims 1 to 5,
further comprising a third classification layer configured to re-identify a third target.

7. The neural network of claim 6, wherein:
- the first classification layer is further configured to transmit a first target identification label associated with the first target to a first classification error component;
- the second classification layer is further configured to transmit a class label associated with the second target to a second classification error component; and
- the third classification layer is further configured to transmit a second target identification label associated with the third target to a third classification error component.

8. The neural network of claim 7, further comprising:
the first classification error component configured to:
- receive a first ground truth target identification; and
- generate a first target identification error based on the first target identification label and the first ground truth target identification;
the second classification error component configured to:
- receive a ground truth class; and
- generate a class error based on the class label and the ground truth class; and
the third classification error component configured to:
- receive a second ground truth target identification; and
- generate a second target identification error based on the second target identification label and the second ground truth target identification.

9. The neural network of claim 8,
further comprising a combined error component configured to:
- receive the first target identification error, the class error, and the second target identification error;
- generate a combined error based on the first target identification error, the class error, and the second target identification error;
- generate one or more updated parameters based on the combined error; and
- transmit the one or more updated parameters to at least one of the feature layers, the first classification layer, or the second classification layer.

10. The neural network of one of claims 1 to 9,
wherein the feature layers are further configured to provide the one or more features to the first classification layer and the second classification layer simultaneously, contemporaneously, or in parallel; and/or
wherein the feature layers comprise at least one of a transform operator, a pattern detector, a convolution operator, or a filter; and/or
wherein the first target and the second target are the same or different.

11. A non-transitory computer readable medium comprising instructions stored therein that, when executed by a processor of a system, cause the processor to:
- cause feature layers to:
- receive receiving one or more snapshots;
- extracting one or more features from the one or more snapshots; and
- providing the one or more features to a first classification layer and a second classification layer;
- cause the first classification layer configured to re-identify a first target; and
- cause the second classification layer configured to classify a second target.

12. The non-transitory computer readable medium of claim 11,
further comprising instructions stored therein that, when executed by the processor of the system, cause the processor to:
- cause the first classification layer to transmit a target identification label associated with the first target to a first classification error component; and
- cause the second classification layer to transmit a class label associated with the second target to a second classification error component.

13. The non-transitory computer readable medium of claim 12,
further comprising instructions stored therein that, when executed by the processor of the system, cause the processor to cause the first classification error component to:
- receive a ground truth target identification; and
- generate a target identification error based on the target identification label and the ground truth target identification.

14. The non-transitory computer readable medium of claim 13,
further comprising instructions stored therein that, when executed by the processor of the system, cause the processor to cause the second classification error component to:
- receive a ground truth class; and
- generate a class error based on the class label and the ground truth class; and/or
further comprising instructions stored therein that, when executed by the processor of the system, cause the processor to cause a combined error component to:
- receive the target identification error and the class error;
- generate a combined error based on the target identification error and the class error;
- generate one or more updated parameters based on the combined error; and
- transmit the one or more updated parameters to at least one of the feature layers, the first classification layer, or the second classification layer.

15. A method of classification and re-identification, comprising:
- receiving one or more snapshots;
- extracting one or more features from the one or more snapshots; and
- providing the one or more features to a first classification layer for classifying a first target and a second classification layer for re-identifying a second target,
wherein extracting the one or more features preferably comprises extracting the one or more features using a plurality of feature layers.
